# EUROPÄISCHE PATENTSCHRIFT

(11) **EP 1 618 055 B1**
(45) Veröffentlichungstag und Bekanntmachung des Hinweises auf die Patenterteilung: **21.03.2007**
(21) Anmeldenummer: 04723973.6
(22) Anmeldetag: 29.03.2004
(51) Int. Cl.: B65G 37/02, B65G 35/08

(54) **VORRICHTUNG UND VERFAHREN ZUM FORTBEWEGEN VON GASTURBINEN, INSBESONDERE BEI DER WARTUNG DERSELBEN**
DEVICE AND METHOD FOR DISPLACING GAS TURBINES, ESPECIALLY DURING MAINTENANCE THEREOF
DISPOSITIF ET PROCEDE POUR DEPLACER DES TURBINES A GAZ, NOTAMMENT LORS DE LEUR MAINTENANCE

(30) Priorität: 27.04.2003 DE 10319016
(43) Veröffentlichungstag der Anmeldung: 25.01.2006
(60) Teilanmeldung: 06014719.6
(73) Patentinhaber: MTU Aero Engines GmbH, 80995 München (DE)
(72) Erfinder: MÜLLER, Peter-Max, 29229 Celle (DE); RENNER, Detlef, 37197 Hattorf/Harz (DE)
(86) Internationale Anmeldenummer: PCT/DE2004/000654
(87) Internationale Veröffentlichungsnummer: WO 2004/096676

(56) Entgegenhaltungen:
- EP-A- 1 106 541
- FR-A- 2 444 535
- US-B1- 6 256 868

## Beschreibung

Die Erfindung betrifft eine Vorrichtung zum Fortbewegen von Gasturbinen nach dem Oberbegriff des Anspruchs 1, d.h. von Flugzeugtriebwerken oder stationären Gasturbinen, oder von Modulen derselben, insbesondere bei der Wartung, sowie ein entsprechendes Verfahren nach dem Oberbegriff des Anspruchs 14.

Der Wartung bzw. Instandhaltung, insbesondere Reparatur, von Gasturbinen, insbesondere Flugzeugtriebwerken, kommt bei der Ermittlung der direkten Betriebskosten eines Flugszeugs eine entscheidende Rolle zu. So sind in etwa 30 % der direkten Betriebskosten eines Flugzeugs den Flugzeugtriebwerken zuzuordnen, wobei in etwa ein Drittel der die Triebwerke betreffenden Betriebskosten auf die Instandhaltung der Flugzeugtriebwerke entfällt. Insofern machen die Kosten für die Instandhaltung von Flugzeugtriebwerken in etwa 10 % der gesamten direkten Betriebskosten eines Flugzeugs aus. Hieraus folgt unmittelbar, dass eine effiziente und kostengünstige Instandhaltung bzw. Wartung und Reparatur von Flugzeugtriebwerken für Fluggesellschaften von entscheidender Bedeutung ist. Ähnliches gilt auch für stationäre Gasturbinen.

Bislang wurde bei der Instandhaltung bzw. Wartung von Gasturbinen, insbesondere Flugzeugtriebwerken, nach dem sogenannten Werkstattprinzip vorgegangen. Bei dem sogenannten Werkstattprinzip verbleibt die Gasturbine bzw. das Flugzeugtriebwerk zumindest in Teilen an einer Position bzw. an einem Ort. Benötigtes Arbeitsmaterial, benötigte Arbeitswerkzeuge sowie benötigtes Arbeitspersonal werden zeitlich so an die Gasturbine herangeführt, dass möglichst wenige Störungen auftreten und eine zugesagte Instandhaltungszeit eingehalten werden kann.

Die Instandhaltung bzw. Wartung von Gasturbinen, insbesondere von Ftugzeugtriebwerken, nach dem sogenannten Werkstattprinzip verfügt jedoch über den Nachteil, dass die Instandhaltung keiner definierten Prozessstruktur folgt. Vielmehr werden Arbeiten an der Gasturbine bzw. am Flugzeugtriebwerk in nahezu beliebiger Reihenfolge durchgeführt, wodurch sich insbesondere dann, wenn gleichzeitig mehrere Gasturbinen gewartet werden, Störungen und Verzögerungen bei der Wartung ergeben können. Eine Wartung von Gasturbinen nach dem sogenannten Werkstattprinzip verfügt demnach Über die Nachteile, dass einerseits keine klare Prozessstruktur besteht und dass andererseits lange Zeiten für die Wartung bzw. Instandhaltung benötigt werden. Dies beeinträchtigt die Effizienz der Wartung.

Auch bei der Neuproduktion von Gasturbinen ist eine effiziente fortbewegung wünschenswert.

Eine Vorrichtung zum Fortbewegen von Trägern oder Förderplattformen ist bereits aus EP-A-1 106 541 bekannt.

Hiervon ausgehend liegt der vorliegenden Erfindung das Problem zu Grunde, eine neuartige Vorrichtung und ein neuartiges Verfahren zum Fortbewegen von Gasturbinen, insbesondere Flugzeugtriebwerken, zu schaffen.

Dieses Problem wird durch eine Vorrichtung mit den Merkmalen des Patentanspruchs 1 gelöst.

Die erfindungsgemäße Vorrichtung zum Fortbewegen von Gasturbinen, insbesondere bei der Wartung derselben, ermöglicht die Wartung bzw. Instandhaltung von Gasturbinen nach einem sogenannten Fließbandprinzip vorzunehmen. Es ist eine grundlegende Erkenntnis der hier vorliegenden Erfindung, dass das Fließbandprinzip auch für Wartungsarbeiten bzw. Instandhaltungsarbeiten an Gasturbinen geeignet ist. Die erfindungsgemäße Vorrichtung ermöglicht eine hohe Effizienz bei der Wartung von Gasturbinen und eine kurze Wartungszeit. Die erfindungsgemäße Vorrichtung kann auch bei der Neuproduktion von Flugzeugtriebwerken eingesetzt werden.

Nach einer vorteilhaften Weiterbildung der Erfindung verfügt die erfindungsgemäße Vorrichtung über eine erste Antriebseinrichtung, um die Förderplattformen vorzugsweise zusammen mit auf den Förderplattformen positionierten Gasturbinen in einer Hauptförderrichtung durch hintereinander angeordnete Arbeitsstationen zu bewegen, und über eine zweite Antriebseinrichtung, um die förderplattformen entgegengesetzt zu einer Hauptförderrichtung der Gasturbinen zu bewegen. Diese Ausgestaltung der erfindungsgemäßen Vorrichtung ist konstruktiv besonders einfach und erlaubt eine sichere Bewegung der Flugzeugtriebwerke.

Vorzugsweise ist die erfindurrgsgemäße Vorrichtung derart in einen Boden einer Werkhalle eingelassen, dass die Ebene, in der diefiörderplattformen in einem Ruhezustand liegen, in der Ebene des Bodens liegt, derart, dass die Förderplattformen barrierefrei zugänglich sind. Dies ist aus Sicherheitsgründen besonders vorteilhaft.

Nach der Erfindung weist jede Förderplattform einen Aufnahmebereich für einen Adapter auf, wobei der Adapter im Aufnahmebereich montierbar ist und an unterschiedliche Typen von Gasturbinen anpassbar ist. Hierdurch wird sichergestellt, dass unterschiedlichste Typen von Gasturbinen durch die hintereinander angeordneten Arbeitsstationen bewegt werden können.

Das erfindungsgemäße Verfahren ist durch die Merkmale des unabhängigen Patentanspruchs 14 gekennzeichnet.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: eine schematisierte Seitenansicht einer erfindungsgemäßen Vorrichtung zum Fortbewegen von Flugzeugtriebwerken oder von Modulen der Flugzeugtriebwerke bei der Wartung derselben, mit drei auf der Vorrichtung positionierten Flugzeugtriebwerken, in einem ersten Zustand;
- Fig. 2:: die Vorrichtung gemäß Fig. 1 in einem zweiten Zustand;
- Fig. 3:: die Vorrichtung gemäß Fig. 1, 2 in einem dritten Zustand;
- Fig. 4:: die Vorrichtung gemäß Fig. 1 bis 3 in einem vierten Zustand;
- Fig. 5:: die Vorrichtung gemäß Fig. 1 bis 4 in einem fünften Zustand;
- Fig. 6:: ein vergrößertes Detail der Vorrichtung gemäß Fig. 1 bis 5 in schematisierter Seitenansicht;
- Fig. 7:: ein anderes vergrößertes Detail der Vorrichtung gemäß Fig. 1 bis 5 in schematisierter Seitenansicht;
- Fig. 8;: ein weiteres Detail der Vorrichtung gemäß Fig. 1 bis 5 in schematisierter Seitenansicht;
- Fig. 9:: das Detail gemäß Fig. 8 in einem zweiten Zustand;
- Fig. 10:: ein weiteres Detail der Vorrichtung gemäß Fig. 1 bis 5 in schematisierter Seitenansicht;
- Fig. 11:: eine weiteres Detail der Vorrichtung gemäß Fig. 1 bis 5 in schematisierter Seitenansicht;
- Fig. 12:: eine Hubeinrichtung der erfindungsgemäßen Vorrichtung gemäß Fig. 1 bis 5 in schematisierter Ansicht von unten;
- Fig. 13:: einen Querschnitt durch die erfindungsgemäße Vorrichtung;
- Fig. 14:: ein Detail des Querschnitts gemäß Fig. 13;
- Fig. 15:: ein weiteres Detail des Querschnitts gemäß Fig. 13;
- Fig. 16:: eine stark schematisierte, perspektivische Ansicht eines Ausschnitts der erfindungsgemäßen Vorrichtung; und
- Fig. 17:: unterschiedliche, auf der erfindungsgemäßen Vorrichtung positionierbare Typen von Flugzeugtriebwerken.

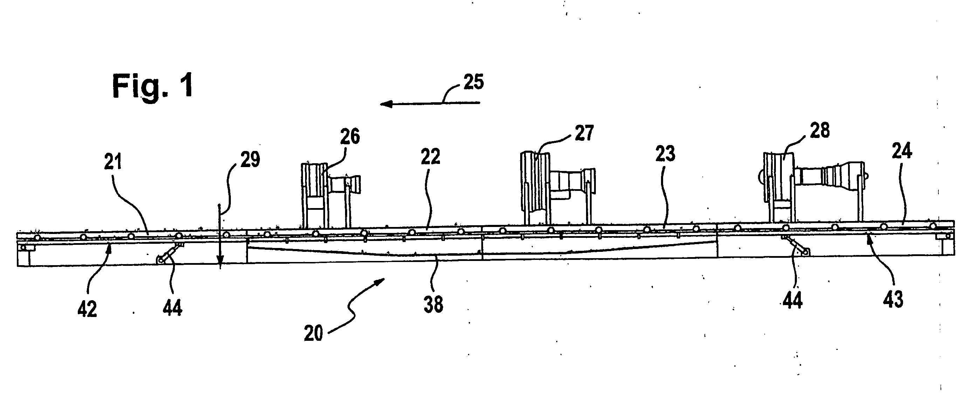

Die erfindungsgemäße Vorrichtung sowie das erfindungsgemäße Verfahren zum Fortbewegen von Gasturbinen werden nachfolgend unter Bezugnahme auf Fig. 1 bis 17 am Beispiel von Flugzeugtreibwerken im Detail beschrieben. Die erfindungsgemäße Vorrichtung dient der Fortbewegung bzw. dem Transportieren von Flugzeugtriebwerken oder von Modulen der Flugzeugtriebwerke bei der Wartung bzw. Instandhaltung derselben.

Es soll nochmals darauf hingewiesen werden, dass sich die erfindungsgemäße Vorrichtung und das Verfahren auch bei der Neuproduktion von Gasturbinen, insbesondere Flugzeugtriebwerken, einsetzen lassen.

Die Wartung bzw. Instandhaltung umfasst die Demontage des Flugzeugtriebwerks in Module und/oder Baugruppen und/oder Einzelteile, die Inspektion sowie gegebenenfalls Reparatur der Module und/oder Baugruppen und/oder Einzelteile sowie die anschließende Montage eines Flugzeugtriebwerks aus inspizierten und/oder repartierten und/oder neuen Modulen und/oder Baugruppen und/oder Einzelteilen. Die erfindungsgemäße Vorrichtung eignet sich insbesondere zum Fortbewegen der Flugzeugtriebwerke bei der Demontage der Flugzeugtriebwerke in Module sowie bei der modulweisen Montage eines Flugzeugtriebwerks. Die erfindungsgemäße Vorrichtung kann jedoch auch bei der Demontage sowie Montage der Module oder Baugruppen des Flugzeugtriebwerks eingesetzt werden. Auch ist prinzipiell vorstellbar, eine solche Vorrichtung bei der eigentlichen Reparatur zu verwenden.

Unter Bezugnahme auf Fig. 1 bis 5 soll nachfolgend zuerst das Prinzip der erfindungsgemäßen Vorrichtung sowie das erfindungsgemäße Verfahren zum Fortbewegen von Flugzeugtriebwerken bei der Wartung derselben beschrieben werden.

So zeigen Fig. 1 bis 5 eine erfindungsgemäße Vorrichtung 20, die insgesamt vier hintereinander angeordnete Förderplattformen 21, 22,23 und 24 aufweist. Ein Pfeil 25 visualisiert eine Hauptförderrichtung der erfindungsgemäßen Vorrichtung 20. In Fig. 1 ist die in Hauptförderrichtung vorn liegende Förderplattform 21 frei bzw. unbesetzt. Auf den hinter der vorne liegenden Förderplattform 21 positionierten Förderplattformen 22, 23 und 24 ist jeweils ein Flugzeugtriebwerk 26, 27 und 28 positioniert. Mithilfe der erfindungsgemäßen Vorrichtung 20 werden die Flugzeugtriebwerke 26, 27 und 28 durch hintereinander angeordnete Arbeitsstationen bewegt, wobei beim Ausführungsbeispiel gemäß Fig. 1 die erfindungsgemäße Vorrichtung 20 im Bereich einer Demontagelinie positioniert ist, woraus folgt, dass bei dem in Fig. 1 gezeigten Ausführungsbeispiel die Flugzeugtriebwerke 26, 27 und 28 bei der Bewegung durch die hintereinander angeordneten Arbeitsstationen in Module zerlegt werden. Sind, wie in Fig. 1 dargestellt, vier Förderplattformen 21, 22, 23 und 24 vorgesehen, so sind auch vier Arbeitsstationen vorhanden. Es ist unmittelbar einleuchtend, dass die Anzahl der Förderplattformen sowie Arbeitsstationen variiert werden kann.

Fig. 1 zeigt die Ruheposition der erfindungsgemäßen Vorrichtung 20, in der dieselbe still steht. In diesem Zustand liegen sämtliche Förderplattformen 21 bis 24 in einer Ebene. Sollen nun die Flugzeugtriebwerke 26, 27 und 28 in Hauptförderrichtung bewegt werden, so wird die in Hauptförderrichtung vorne liegende Förderplattform 21 freigeräumt. Dies bedeutet, dass in dem Fall, in dem die erfindungsgemäße Vorrichtung 20 in einer Demontagelinie des Flugzeugtriebwerks angeordnet ist, im Bereich der vorne liegenden Arbeitsstation, in welcher sich die vorne liegende Förderplattform 21 befindet, die Demontage eines Flugtriebwerks in einzelne Module abgeschlossen ist. Nach dem Freiräumen der in Förderrichtung vorne liegenden Förderplattform 21 wird dieselbe im Sinne des Pfeils 29 abgesenkt.

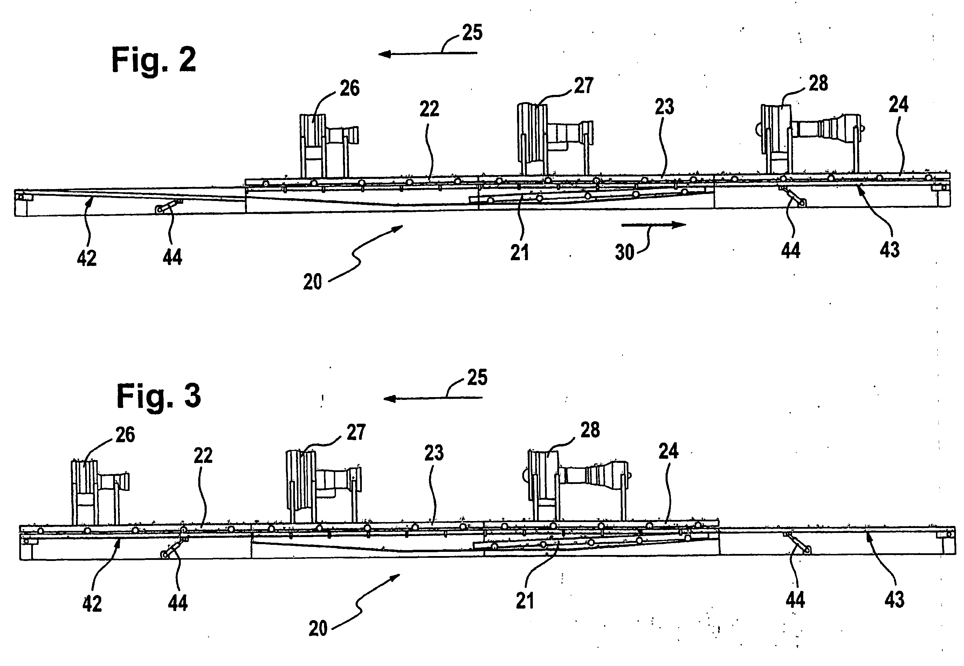

Die abgesenkte Förderplattform 21 ist sodann unterhalb der von den Förderptattformen 22, 23 und 24 im Ruhezustand gebildeten Ebene entgegengesetzt zur Hauptförderrichtung im Sinne des Pfeils 30 (siehe Fig. 2) bewegbar. Durch das Absenken sowie nach hinten Bewegen der ursprünglich in Hauptförderrichtung vorne liegenden Förderplattform 21 wird ein vorderer Abschnitt im Bereich der vorne liegenden Arbeitsstation freigegeben.

Die hinter der abgesenkten sowie entgegengesetzt zur Hauptförderrichtung bewegten Förderplattform 21 angeordneten Förderplattformen 22, 23 und 24 sind sodann in Hauptförderrichtung nach vorne bewegbar. Dies kann insbesondere Fig. 3 entnommen werden. Hierdurch wird jede der Förderplattformen 22, 23 und 24 um eine Arbeitsstation in Hauptförderrichtung nach vorne bewegt. Die Förderplattform 22 füllt hierdurch den von der ursprünglich vorne liegenden Förderplattform 21 freigegebenen Abschnitt aus. Dadurch, dass jede der hintereinander angeordneten Förderplattformen 22, 23 und 24 um eine Arbeitsstation nach vorne bewegt wird, wird die in Hauptförderrichtung hinten liegende Arbeitsstation freigegeben, d.h. die ursprünglich in Hauptförderrichtung hinten liegende Förderplattform 24 gibt einen Abschnitt innerhalb einer ebenfalls hinten liegenden Arbeitsstation frei. Bei Bewegung der Förderplattformen 22, 23 und 24 in Hauptförderrichtung verbleibt die abgesenkte sowie zuvor entgegengesetzt zur Hauptförderrichtung bewegte Förderplattform 21 in ihrer Position.

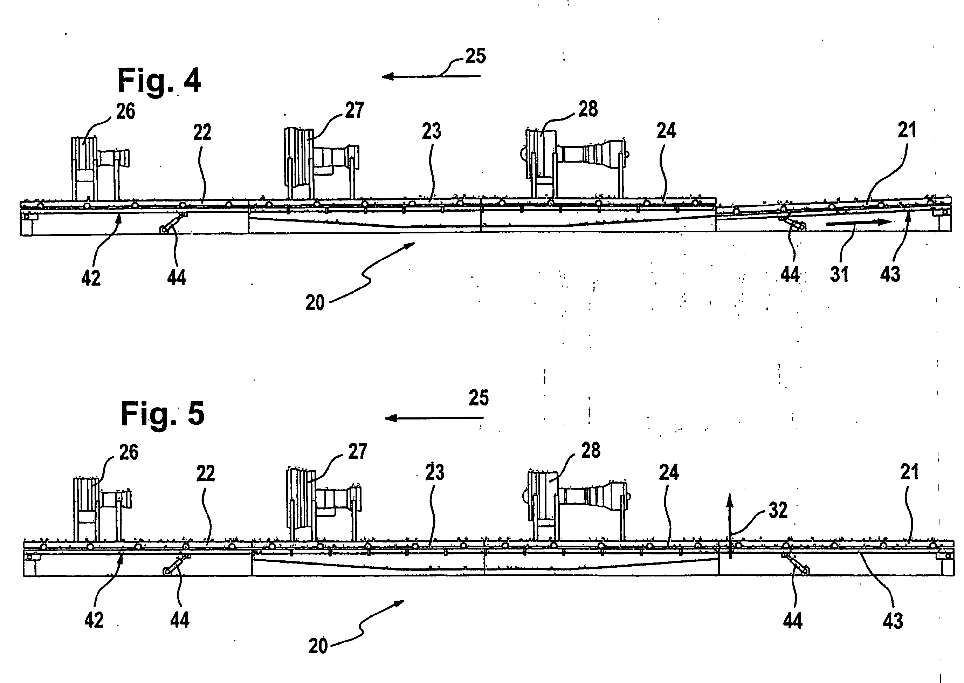

Durch eine weitere Bewegung der abgesenkten Förderplattform 21 entgegengesetzt zur Hauptförderrichtung gemäß Pfeil 31 und nachfolgendes Anheben derselben gemäß Pfeil 32 ist die abgesenkte sowie ursprünglich vorne liegende Förderplattform 21 in den von der ursprünglich hinten liegenden Förderplattform 24 freigegebenen Abschnitt innerhalb der hinten liegenden Arbeitsstation einbringbar. Dieser Abschnitt wird demnach von der Plattform 21 besetzt. Dies kann insbesondere Fig. 4 und 5 entnommen werden. In dem Bereich der in Hauptförderrichtung hinten liegenden Arbeitsstation ist dann auf der Förderplattform 21 wiederum ein Flugzeugtriebwerk positionierbar. In der in Hauptförderrichtung hinten liegenden Arbeitsstation wird demnach mit der modulweisen Demontage der Flugzeugtriebwerke begonnen.

Mithilfe der erfindungsgemäßen Vorrichtung sind demzufolge Flugzeugtriebwerke durch mehrere hintereinander angeordnete Arbeitsstationen bewegbar, wobei die Arbeitsstationen der schrittweisen Demontage, Reparatur oder auch Montage der Flugzeugtriebwerke dienen können. Die Fördereinrichtung 20 ermöglicht eine diskontinuierliche Bewegung der Flugzeugtriebwerke in Hauptförderrichtung, d.h., die Flugzeugtriebwerke werden nach einem vorgegebenen Takt durch die Arbeitsstationen bewegt. Der Takt, in dem die Flugzeugtriebwerke durch die Arbeitsstationen bewegt werden bzw. in dem die Förderplattformen bewegt werden, beträgt vorzugsweise sechszehn Stunden oder auch zwölf Stunden. Zwischen zwei Taktzyklen steht die Vorrichtung still und befindet sich demnach im Ruhezustand (siehe Fig. 1). Innerhalb dieser sechszehn Stunden bzw. zwölf Stunden können Arbeiten an den Flugzeugtriebwerken in den jeweiligen Arbeitsstationen durchgeführt werden. Im Verhältnis zur Taktzeit ist die Zeit, die zur Fortbewegung der flugzeugtriebwerke bzw. Förderplattformen benötigt wird, kurz. So dauert ein Fortbewegungszyklus im Sinne der Fig. 1 bis 5 in etwa zwanzig Minuten.

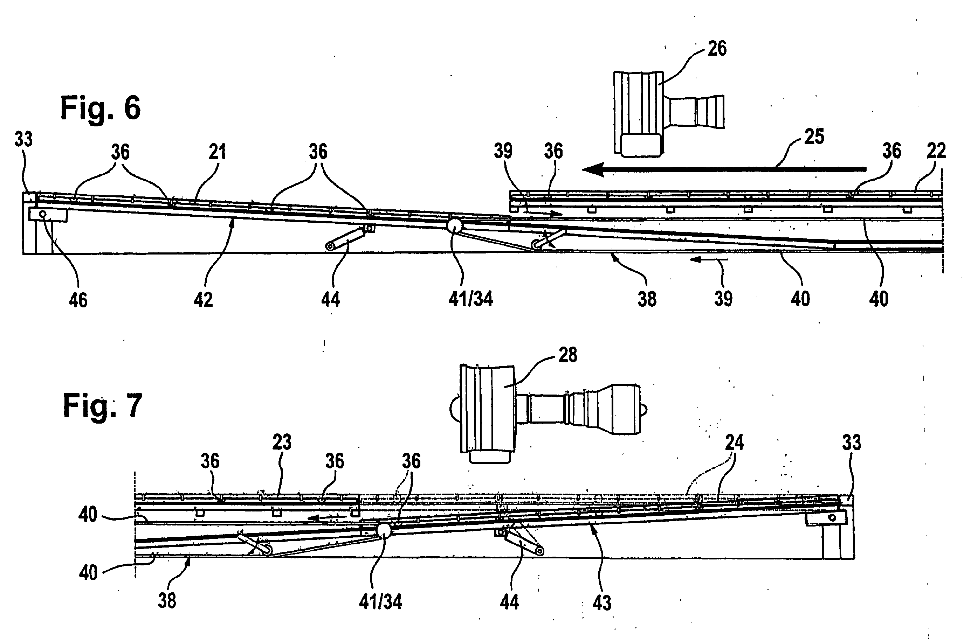

Die erfindungsgemäße Vorrichtung 20 ist vorzugsweise derart in einen Boden 33 einer Werkhalle eingelassen, dass die Ebene, in der die Förderplattformen 21, 22, 23 und 24 im Ruhezustand liegen, in der Ebene des Bodens 33 liegt. Dies kann insbesondere Fig. 6 und 7 sowie Fig. 13 bis 15 entnommen werden. Hierdurch ist sichergestellt, dass ein barrierefreier Zugang der Förderplattformen 21, 22, 23 und 24 im Ruhezustand derselben möglich ist. Arbeiter, die demnach zur Durchführung von Demontage- oder Reparatur- oder Montagearbeiten die Förderplattformen 21 bis 24 betreten müssen, können ausgehend vom Boden 33 der Werkhalle die Förderplattformen 21 bis 24 ohne hinderliche Stufen betreten. Dies erhöht die Arbeitssicherheit.

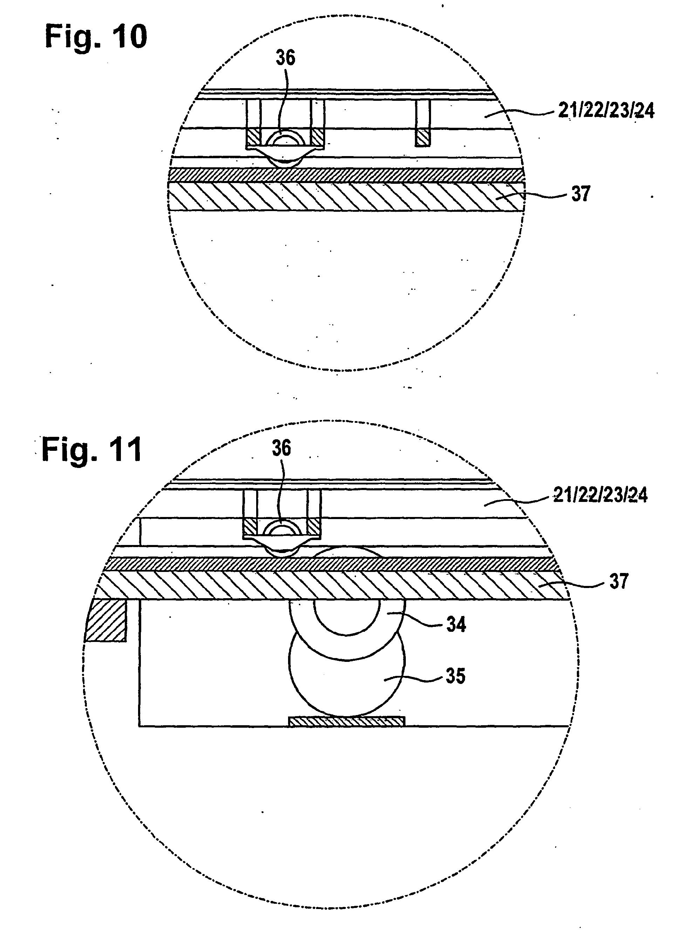

Die erfindungsgemäße Vorrichtung 20 verfügt über eine erste Antriebseinrichtung, um die Förderplattformen 21 bis 24 vorzugsweise zusammen mit auf den Förderplattformen 21 bis 24 positionierten Flugzeugtriebwerken 26, 27 und 28 in Hauptförderrichtung zu bewegen. Die erste Antriebseinrichtung zur Bewegung der Förderplattformen 21 bis 24 umfasst mehrere Reibräder 34. Ein derartiges Reibrad 34 ist in Fig. 11 dargestellt. Das Reibrad 34 wird von einem zugeordneten Motor 35 angetrieben und überträgt die Antriebsleistung des Motors 35 auf die Förderplattformen 21, 22, 23 und 24. Im Bereich jeder Arbeitsstation ist mindestens ein derartiges Reibrad 34 angeordnet. Hierdurch ist sichergestellt, dass bei Fortbewegung der Förderplattformen 21 bis 24 in Hauptförderrichtung für jede Förderplattform 21 bis 24 mindestens ein aktives Reibrad 34 bereitsteht. Vorzugsweise ist zu beiden Seiten der Förderplattformen 21 bis 24 mindestens eines der Reibräder vorgesehen.

Um eine einfache Bewegung der Förderplattformen 21 bis 24 in Hauptförderrichtung zu ermöglichen, sind den Förderplattformen 21 bis 24 insbesondere entlang ihrer Längsseiten mehrere Laufräder 36 zugeordnet. Diese Laufräder sind zum Beispiel in Fig. 6 und 7 sowie Fig. 10 und 11 gezeigt. Wie am besten Fig. 10 und 11 entnommen werden kann, liegen die Laufräder 36 auf Führungsschienen 37 bzw. Führungsleisten auf, die sich insbesondere zu beiden Seiten der Förderplattformen 21 bis 24 erstrecken. Hierdurch wird einerseits eine sichere Führung der Förderplattformen 21 bis 24 gewährleistet und andererseits sind die Förderplattformen 21 bis 24 mit geringem Widerstand in Hauptförderrichtung bewegbar.

Zur Bewegung einer abgesenkten Förderplattform 21 entgegengesetzt zur Hauptförderrrchtung verfügt die erfindungsgemäße Vorrichtung 20 über eine zweite Antriebseinrichtung. Die zweite Antriebseinrichtung ist als Kettenförderer 38 ausgebildet. Der Kettenförderer 38 ist insbesondere in Fig. 6 bis 9 dargestellt.

Der Kettenförderer 38 erstreckt sich über den gesamten Bereich der Arbeitsstationen, die zwischen der in Hauptförderrichtung vorne liegenden Arbeitsstation sowie der in Förderrichtung hinten liegenden Arbeitsstation angeordnet sind. In dem Bereich der in Hauptförderrichtung vorne liegenden Arbeitsstation sowie der in Hauptförderrichtung hinten liegenden Arbeitsstation erstreckt sich der Kettenförderer 38 zumindest abschnittsweise. Dies zeigen Fig. 6 und 7 besonders deutlich. Der Kettenförderer 38 umfasst eine im Sinne der Pfeile 39 umlaufende Förderkette 40. Umlenkrollen 41 für die Förderkette 40 sind im Bereich der in Hauptförderrichtung vorne liegenden Arbeitsstation sowie der in Hauptförderrichtung hinten liegenden Arbeitsstation angeordnet. Über den Kettenförderer 38 ist demnach eine abgesenkte Förderplattform21 unterhalb der übrigen Förderplattformen 22 bis 24 entgegengesetzt zur Hauptförderrichtung bewegbar.

An dieser Stelle sei angemerkt, dass die erste Antriebseinrichtung zur Bewegung der Förderplattformen 21 bis 24 in Hauptförderrichtung einen Beschleunigungswert von ca. 2 m/min nicht überschreiten sollte. Für die zweite Fördereinävchtungzur Bewegung abgesenkter Förderplattformen entgegengesetzt zur Hauptförderrichtung sind Beschleunigungswerte von bis zu 4 m/min möglich. Die zweite Fördereinrichtung erlaubt demnach eine schnellere Fortbewegung der Förderplattformen als die erste Fördereinrichtung.

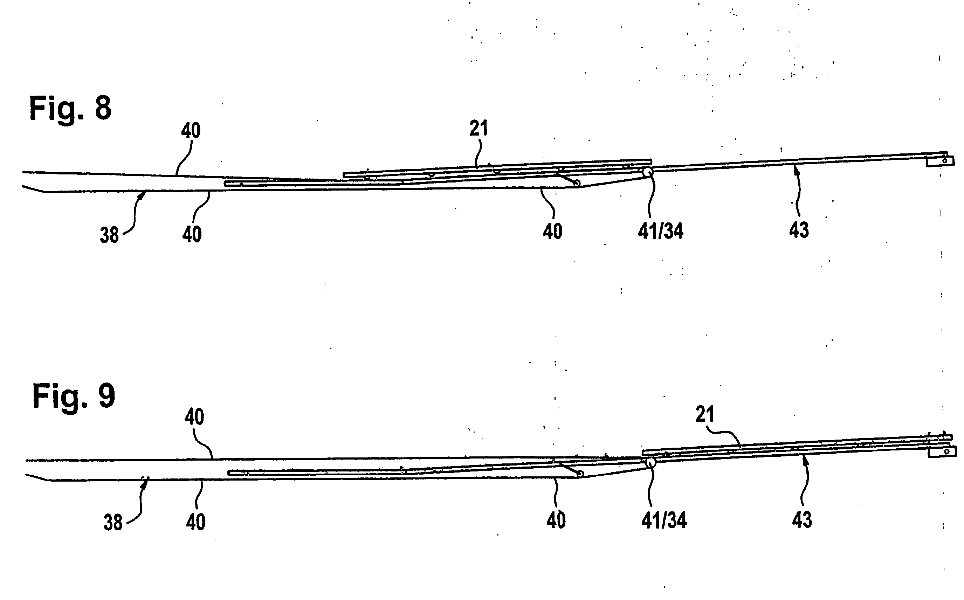

Wie insbesondere Fig. 8 und 9 entnommen werden kann, ist im Bereich der Umlenkrolle 41 auch eines der Reibräder 34 positioniert. So zeigt Fig. 8, wie eine in den Bereich der in Hauptförderrichtung hinten liegenden Arbeitsstation zu bewegende Förderptattform 21 gerade vom entsprechenden Reibrad 34 erfasst wird. Fig. 9 zeigt dieselbe Anordnung wie Fig. 8, jedoch mit einem entgegengesetzt zur Hauptförderrichtung in die in Hauptförderrichtung hinten liegende Arbeitsstation hineinbewegter Förderplattform 21. Die Reibräder 34 sind demzufolge an einem in Hauptförderrichtung vorne liegenden Ende der jeweiligen Arbeitsstationen positioniert, damit die Förderptattformen 21 bis 24 über die gesamte zurückzulegende Strecke mit den Reibrädern 34 in Kontakt stehen.

Zum Anheben sowie zum Absenken von Förderplattformen, die entgegengesetzt zur Hauptförderrichtung transportiert werden müssen, umfasst die erfindungsgemäße Vorrichtung 20 Hubeinrichtungen Eine erste Hubeinrichtung 42 ist im Bereich der in Hauptförderrichtung vorliegenden Arbeitsstation positioniert. Eine zweite Hubeinrichtung 43 ist im Bereich in Hauptförderrichtung hinten liegenden Arbeitsstation positioniert. Die erste Hubeinrichtung 42 ist am deutlichsten in Fig. 6 dargestellt. Die zweite Hubeinrichtung 43 ist in Fig. 7 in zwei unterschiedlichen Positionen dargestellt, nämlich in einer ersten abgesenkten Position sowie in einer zweiten hochgefahrenen Position. Das Absenken sowie Anheben der Hubeinrichtungen 42, 43 erfolgt mithilfe von den Hubeinrichtungen 42; 43 zugeordneten Hubzylindern 44. Die Hubzylinder 44 sind vorzugsweise als Hydraulikzylinder ausgebildet.

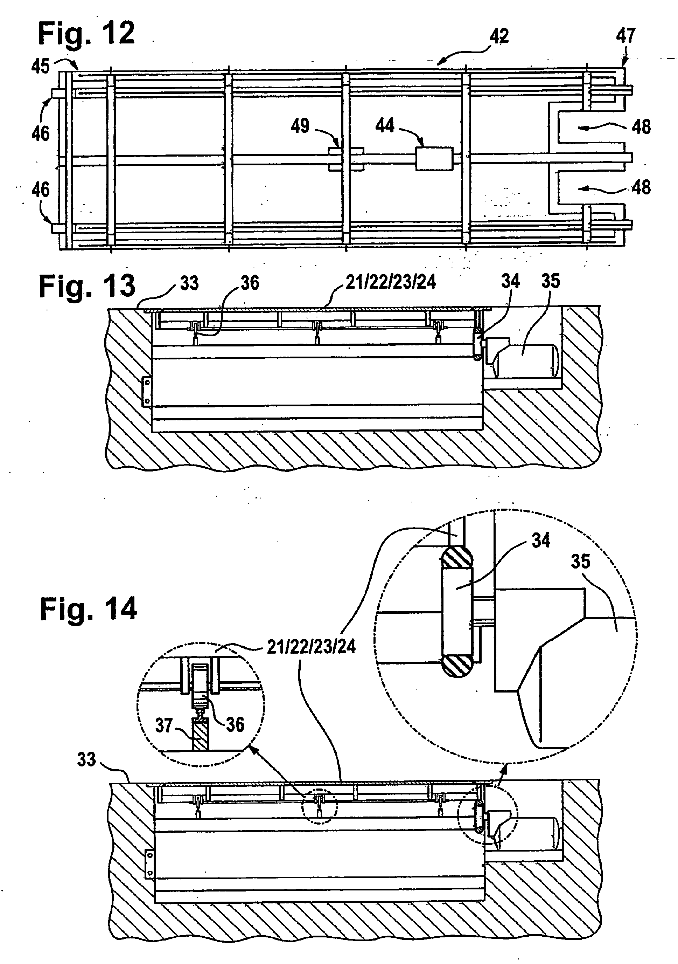

Die in Hauptförderrichtung vorne liegende Hubeinrichtung 42 ist in Fig. 12 in einer Ansicht von unten dargestellt. Benachbart zum Boden 33 (siehe Fig. 6) sind der Hubeinrichtung 42 an einem ersten Ende 45 Drehlager 46 bzw. Kipplager zugeordnet. Über die Drehlager 46 ist die Hubeinrichtung 42 mit dem ersten Ende 45 schwenkbar am Boden 33 befestigt und auf Betätigung des Hubzylinders 44 um die Drehlager 46 kippbar. An einem dem Ende 45 gegenüberliegenden Ende 47 verfügt die Hubeinrichtung 42 über Ausnehmungen 48. In die Ausnehmungen 48 erstreckt sich der Kettenförderer 38. Hierdurch ist sichergestellt, dass eine abgesenkte Förderplattform 21 unmittelbar vom Kettenförderer 38 erfasst werden kann. Um eine unkontrollierte Bewegung einer abgesenkten Förderplattform in Folge der Schwerkraft zu vermeiden, ist der Hubeinrichtung 42 in einem mittleren Abschnitt eine Bremseinrichtung 49 für eine Förderplattform zugeordnet.

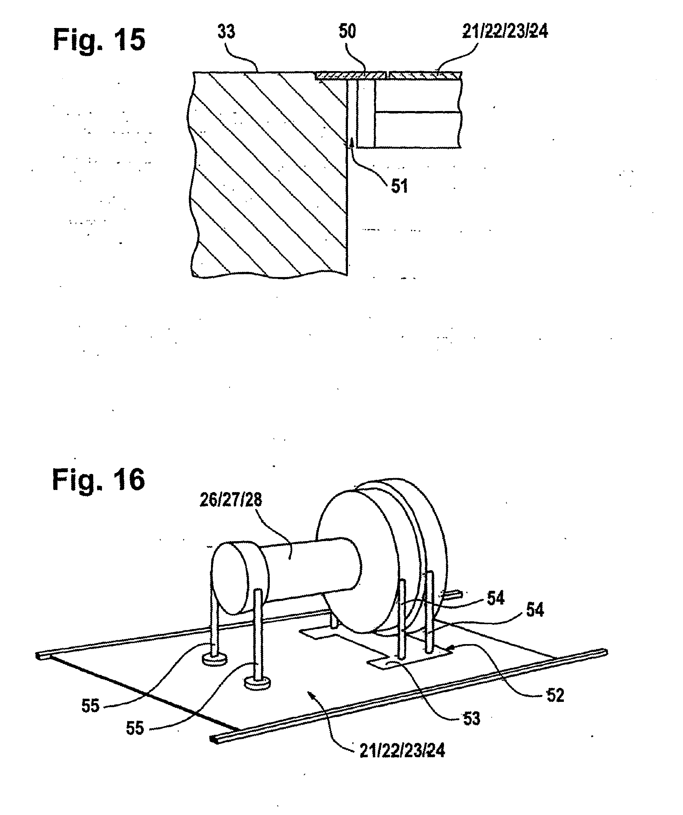

Es liegt weiterhin im Sinne der hier vorliegenden Erfindung, Spalte zwischen den Förderplattformen 21, 22, 23, 24 und dem Boden 33 der Werkhalle zu minimieren. Dies kann insbesondere Fig. 15 entnommen werden. Hierdurch soll sichergestellt werden, dass dann, wenn Arbeiter zur Durchführung von Arbeitsschritten an den Flugzeugtähbwerken die Förderplattformen 21 bis 24 betreten, weder Werkzeuge noch demontierte Teile des Flugzeugtriebwerks durch Spalte in einen Bereich unterhalb der Förderplattformen 21 bis 24 fallen können. Gemäß Fig. 15 ist hierzu zwischen der eigentlichen Förderplattform 21 bis 24 und dem Boden 33 eine in der Ebene des Bodens 33 bzw. der Ebene der Förderplattformen 21 bis 24 liegende Abdeckung 50 vorgesehen. Die Abdeckung 50 überdeckt einen Spalt 51 zwischen den Arbeitsplattformen 21 bis 24 und dem Boden 33. Herabfallende Werkzeuge bzw. Teile eines Flugzeugtriebwerks werden demnach von der Abdeckung 50 aufgehalten und können so nicht in den Spalt 51 gelangen.

Nach einem weiteren Aspekt der hier vorliegenden Erfindung ist eine Oberfläche der Förderplattformen 2 1 bis 24 mit einer rutschsicheren Beschichtung versehen. Bei der Demontage bzw. sonstigen Arbeiten am Flugzeugtriebwerk können aus dem Flugzeugtriebwerk Schmierstoffe oder andere Flüssigkeiten, also Öl oder Kerosin, austreten. Durch den rutschhemmenden Belag auf der Oberfläche der Förderptattformen 21 bis 24 ist dann sichergestellt, dass selbst dann, wenn Öl oder Kerosin aus dem Flugzeugtriebwerk austreten, Arbeiter einen sicheren Stand auf der Förderplattform haben. Die Förderplattformen 21 bis 24 sind vorzugsweise zwölf Meter lang und vier Meter breit,

Fig. 16 zeigt eine perspektivische Ansicht einer Förderplattform 21 bis 24 mit einem auf der Förderplattform positionierten Flugzeugtriebwerk 26 bis 28. Das Flugzeugtriebwerk wird auf der Förderplattform durch einen Adapter 52 gehalten. Der Adapter 52 ist in einem Aufnahmebereich 53 der Förderplattform montiert. Der Adapter 52 verfügt über insgesamt vier Stützen 54. Jeweils zwei dieser Stützen 54 sind zu einer Seite des Flugzeugtriebwerks angeordnet. Die Position sowie der Abstand der Stützen 54 zueinander im Aufnahmebereich 53 ist an den jeweiligen Typ des Flugzeugtriebwerks individuell anpassbar. Hierdurch wird ermöglicht, dass in den Förderplattformen 21 bis 24 unterschiedliche Typen von Flugzeugtriebwerken aufgenommen werden können. Die Stützen 54 sind einem vorderen Bereich des Triebwerks zugeordnet. Ein hinterer Bereich des Triebwerks wird durch zwei konventionelle Stützen 55 abgestützt.

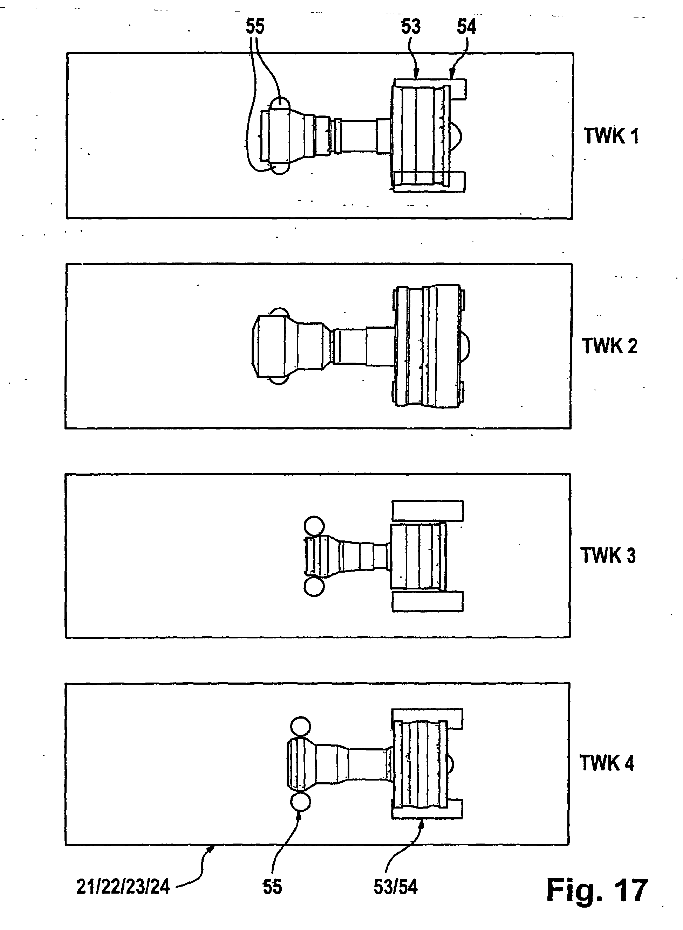

Fig. 17 verdeutlicht, dass auf den Förderplattformen 21 bis 24 unterschiedliche Triebwerkstypen positioniert werden können. So zeigt Fig. 17 vier Förderplattformen, wobei auf jeder dieser Förderplattformen ein unterschiedliches Flugzeugtriebwerk TWK 1, TWK2, TWK3 oder TWK4 angeordnet ist. Die Typen von Flugzeugtriebwerken sind Serientriebwerke und dem Fachmann geläufig. Fig. 17 visualisiert die unterschiedlichen räumlichen Abmessungen der unterschiedlichen Typen von Flugzeugtriebwerken sowie deren unterschiedliche Krafteinleitung auf die Förderplattformen 21 bis 24. Weiterhin kann Fig. 17 entnommen werden, dass sowohl die vorderen Stützen 54 als auch die hinteren Stützen 55 in unterschiedlicher Position auf den Förderplattformen 21 bis 24 angeordnet werden können.

Die erfindungsgemäße Vorrichtung ermöglicht eine zuverlässige sowie sichere Bewegung von zu wartenden Flugzeugtriebwerken durch hintereinander angeordnete Arbeitsstationen. Mithilfe der erfindungsgemäßen Vorrichtung ist eine Wartung bzw. Instandhaltung von Flugzeugtriebwerken nach dem sogenannten Fließbandprinzip möglich. Mithilfe der erfindungsgemäßen Vorrichtung ist das erfindungsgemäße Verfahren ausführbar. Die erfindungsgemäße Vorrichtung ist konstruktiv einfach. Sie ist kostengünstig realisierbar.

## Patentansprüche

1. Vorrichtung zum Fortbewegen von Gasturbinen, insbesondere Flugzeugtriebwerken (26, 27, 28), oder Modulen von Gasturbinen, insbesondere bei der Wartung derselben, mit mehreren hintereinander angeordneten Förderplattformen (21, 22, 23, 24), wobei auf jeder der Förderplattformen mindestens eine Gasturbine positioniert werden kann, und wobei die oder jede Gasturbine durch Bewegung der Förderplattformen (21, 22, 23, 24) bewegbar ist, **dadurch gekennzeichnet, dass** jede Förderplattform (21, 22, 23, 24) einen Aufnahmebereich (53) für einen Adapter (52) aufweist, wobei der Adapter (52) im Aufnahmebereich (53) montierbar ist und an unterschiedliche Typen von Gasturbinen anpassbar ist.

2. Vorrichtung nach Anspruch 1, **dadurch gekennzeichnet, dass** die Vorrichtung derart in einen Boden (33) einer Werkhalle eingelassen ist, dass die Ebene, in der die Förderplattformen (21, 22, 23, 24) im Ruhezustand liegen, in der Ebene des Bodens liegt, derart, dass die Förderplattformen barrierefrei zugänglich sind.

3. Vorrichtung nach einem der Ansprüche 1 und 2, **gekennzeichnet durch** eine erste Antriebseinrichtung, um die Förderplattformen (21, 22, 23, 24) vorzugsweise zusammen mit einer auf den Förderplattformen positionierten Gasturbine in einer Hauptförderrichtung (25) **durch** hintereinander angeordnete Arbeitsstationen zu bewegen.

4. Vorrichtung nach Anspruch 1 oder 2 oder 3, **gekennzeichnet durch** eine zweite Antriebseinrichtung, um die Förderplattformen (21, 22, 23, 24) entgegengesetzt zu einer Hauptförderrichtung (25) der Gasturbinen zu bewegen.

5. Vorrichtung nach einem oder mehreren der Ansprüche 1 bis 4, **dadurch gekennzeichnet, dass** die Förderplattformen (21, 22, 23, 24) im Ruhezustand in einer Ebene liegen.

6. Vorrichtung nach Anspruch 5, **dadurch gekennzeichnet, dass** zur Bewegung der Förderplattformen (21, 22, 23, 24) in einer Hauptförderrichtung (25) der Gasturbinen eine in Hauptförderrichtung vorn liegende Förderplattform (21) absenkbar und unterhalb der Ebene entgegengesetzt zur Hauptförderrichtung bewegbar ist, so dass ein vorderer Abschnitt freigegeben und hinter der abgesenkten Förderplattform (21) angeordnete Förderplattformen (22, 23, 24) in Hauptförderrichtung bewegbar sind.

7. Vorrichtung nach Anspruch 6, **dadurch gekennzeichnet, dass** die abgesenkte und unterhalb der Ebene entgegengesetzt zur Hauptförderrichtung bewegte Förderplattform (21) nach Fortbewegung der übrigen Förderplattformen (22, 23, 24) in Hauptförderrichtung derart anhebbar ist, dass ein von einer hinteren Förderplattform (24) freigegebener Abschnitt besetzbar ist.

8. Vorrichtung nach einem oder mehreren der Ansprüche 1 bis 7, **dadurch gekennzeichnet, dass** eine erste Antriebseinrichtung zur Bewegung der Förderplattformen (21, 22, 23, 24) in der Hauptförderrichtung (25) mehrere Reibräder (34) umfasst, wobei die Reibräder (34) derart angeordnet sind, dass jede in Hauptförderrichtung zur bewegende Förderplattform (21, 22, 23, 24) mit mindestens einem Reibrad (34) in Kontakt steht.

9. Vorrichtung nach einem oder mehreren der Ansprüche 1 bis 8, **dadurch gekennzeichnet, dass** das eine zweite Antriebseinrichtung zur Bewegung einer Förderplattform (21, 22, 23, 24) entgegengesetzt zur Hauptförderrichtung als Kettenförderer (38) ausgebildet ist.

10. Vorrichtung nach einem oder mehreren der Ansprüche 1 bis 9, **gekennzeichnet durch** Hubeinrichtungen (42, 43) zum Absenken bzw. Anheben der Förderplattformen, wobei eine erste Hubeinrichtung (42) im Bereich einer ersten, vorn liegenden Arbeitsstation und eine zweite Hubeinrichtung (43) im Bereich einer zweiten, hinten liegenden Arbeitsstation angeordnet ist.

11. Vorrichtung nach einem oder mehreren der Ansprüche 1 bis 10, **dadurch gekennzeichnet, dass** eine Oberfläche der Förderplattformen (21, 22, 23, 24) eine rutschsichere Beschichtung aufweist.

12. Vorrichtung nach einem oder mehreren der Ansprüche 1 bis 11, **dadurch gekennzeichnet, dass** Spalte (51) zwischen den Förderplattformen (21, 22, 23, 24) und einem Boden (33) derart minimiert sind, dass weder Werkzeuge noch Teile einer Gasturbine durch die Spalte in einen Bereich unterhalb der Förderplattformen (21, 22, 23, 24) fallen können.

13. Vorrichtung nach einem oder mehreren der Ansprüche 1 bis 12, **dadurch gekennzeichnet, dass** die Förderplattformen (21, 22, 23, 24) diskontinuierlich, vorzugsweise nach einem Takt, bewegbar sind.

14. Verfahren zum Fortbewegen von Gasturbinen, nämlich Flugzeugtriebwerken (26, 27, 28), oder Modulen von Gasturbinen bei der Wartung derselben, wobei auf Förderplattformen (21, 22, 23, 24) positionierte Gasturbinen in einer Hauptförderrichtung durch mehrere hintereinander angeordnete Arbeitsstationen bewegt werden, derart, dass die oder jede Gasturbine oder die Module derselben durch die Bewegung der Förderplattformen (21, 22, 23, 24) bewegt wird, wobei die Wartung die Demontage des Flugzeugtriebwerks (26, 27, 28) in Module und/oder Baugruppen und/oder Einzelteile, die Inspektion sowie gegebenenfalls Reparatur der Module und/oder Baugruppen und/oder Einzelteile sowie die anschließende Montage eines Flugzeugtriebwerks (26, 27, 28) aus inspizierten und/oder repartierten und/oder neuen Modulen und/oder Baugruppen und/oder Einzelteilen umfasst.

15. Verfahren nach Anspruch 14, **dadurch gekennzeichnet, dass** die Flugzeugtriebwerke (26, 27, 28) diskontinuirlich, nämlich nach einem vorgegebenen Takt durch die Arbeitsstationen bewegt werden.

16. Verfahren nach einem der Ansprüche 14 und 15, **dadurch gekennzeichnet, dass** eine erste Antriebseinrichtung zur Bewegung der Förderplattformen (21, 22, 23, 24) in Hauptförderrichtung einen Beschleunigungswert von ca. 2 m/min nicht überschreitet.

17. Verfahren nach einem der Ansprüche 14 bis 16, **dadurch gekennzeichnet, dass** die Förderplattformen (21, 22, 23, 24) im Ruhezustand in einer Ebene liegen.

18. Verfahren nach Anspruch 14 bis 17, **dadurch gekennzeichnet, dass** zur Bewegung der Förderplattformen (21, 22, 23, 24) in der Hauptförderrichtung (25) der Gasturbinen eine in Hauptförderrichtung vorn liegende Förderplattform (21) abgesenkt und unterhalb der Ebene entgegengesetzt zur Hauptförderrichtung (30) bewegt wird, so dass ein vorderer Abschnitt freigegeben und hinter der angesenkten Förderplattform angeordnete Förderplattformen (22, 23, 24) in Hauptförderrichtung (25) bewegbar sind.

19. Verfahren nach Anspruch 18, **dadurch gekennzeichnet, dass** die abgesenkte und unterhalb der Ebene entgegengesetzt zur Hauptförderrichtung (30) bewegte Förderplattform (21) nach Fortbewegung der übrigen Förderplattformen (22, 23, 24) in Hauptförderrichtung (25) derart angehoben wird, dass ein von einer hinteren Förderplattform (24) freigegebener Abschnitt besetzt wird.

## Claims

1. Device for moving gas turbines, especially aircraft engines (26, 27, 28), or modules of gas turbines, especially during maintenance thereof, having a plurality of conveyor platforms (21, 22, 23, 24) arranged one behind the other, it being possible for at least one gas turbine to be positioned on each of the conveyor platforms and the or each gas turbine being movable by movement of the conveyor platforms (21, 22, 23, 24), **characterised in that** each conveyor platform (21, 22, 23, 24) has a receiver region (53) for an adapter (52), the adapter (52) being mountable in the receiver region (53) and being adaptable to different types of gas turbine.

2. Device according to claim 1, **characterised in that** the device is set into a floor (33) of a workshop in such a manner that the plane in which the conveyor platforms (21, 22, 23, 24) lie in the non-working state lies in the plane of the floor, so that the conveyor platforms are accessible without obstacles.

3. Device according to either claim 1 or claim 2, **characterised by** a first drive device for moving the conveyor platforms (21, 22, 23, 24), preferably together with a gas turbine positioned on the conveyor platforms, in a main transport direction (25) through working stations arranged one behind the other.

4. Device according to claim 1 or 2 or 3, **characterised by** a second drive device for moving the conveyor platforms (21, 22, 23, 24) in the opposite direction to a main transport direction (25).

5. Device according to one or more of claims 1 to 4, **characterised in that** the conveyor platforms (21, 22, 23, 24) lie in a plane in the non-working state.

6. Device according to claim 5, **characterised in that**, for moving the conveyor platforms (21, 22, 23, 24) in a main transport direction (25) of the gas turbines, a conveyor platform (21) located at the front in the main transport direction can be lowered and moved beneath the plane in the opposite direction to the main transport direction, so that a front section is freed and conveyor platforms (22, 23, 24) arranged behind the lowered conveyor platform (21) can be moved in the main transport direction.

7. Device according to claim 6, **characterised in that** the conveyor platform (21) that has been lowered and moved beneath the plane in the opposite direction to the main transport direction can be raised, after the remaining conveyor platforms (22, 23, 24) have moved in the main transport direction, so that a section freed by a rear conveyor platform (24) can be occupied.

8. Device according to one or more of claims 1 to 7, **characterised in that** a first drive device for moving the conveyor platforms (21, 22, 23, 24) in the main transport direction (25) comprises a plurality of friction wheels (34), the friction wheels (34) being so arranged that each conveyor platform (21, 22, 23, 24) to be moved in the main transport direction is in contact with at least one friction wheel (34).

9. Device according to one or more of claims 1 to 8, **characterised in that** a second drive device for moving a conveyor platform (21, 22, 23, 24) in the opposite direction to the main transport direction is in the form of a chain conveyor (38).

10. Device according to one or more of claims 1 to 9, **characterised by** lifting devices (42, 43) for lowering and raising the conveyor platforms, a first lifting device (42) being arranged in the region of a first working station located at the front and a second lifting device (43) being arranged in the region of a second working station located at the back.

11. Device according to one or more of claims 1 to 10, **characterised in that** a surface of the conveyor platforms (21, 22, 23, 24) has a non-slip coating.

12. Device according to one or more of claims 1 to 11, **characterised in that** gaps (51) between the conveyor platforms (21, 22, 23, 24) and a floor (33) are so minimised that neither tools nor parts of a gas turbine can fall through the gaps into a region beneath the conveyor platforms (21, 22, 23, 24).

13. Device according to one or more of claims 1 to 12, **characterised in that** the conveyor platforms (21, 22, 23, 24) are movable discontinuously, preferably at regular intervals.

14. Method for moving gas turbines, namely aircraft engines (26, 27, 28), or modules of gas turbines during maintenance thereof, gas turbines positioned on conveyor platforms (21, 22, 23, 24) being moved in a main transport direction through a plurality of working stations arranged one behind the other, in such a manner that the or each gas turbine or the modules thereof are moved by the movement of the conveyor platforms (21, 22, 23, 24), maintenance comprising dismantling the aircraft engine (26, 27, 28) into modules and/or components and/or individual parts, inspecting and, where appropriate, repairing the modules and/or components and/or individual parts, and subsequently assembling an aircraft engine (26, 27, 28) from inspected and/or repaired and/or new modules and/or components and/or individual parts.

15. Method according to claim 14, **characterised in that** the aircraft engines (26, 27, 28) are moved through the working stations discontinuously, namely at predetermined regular intervals.

16. Method according to either claim 14 or claim 15, **characterised in that** a first drive device for moving the conveyor platforms (21, 22, 23, 24) in the main transport direction does not exceed an acceleration value of approximately 2 m/minute.

17. Method according to any one of claims 14 to 16, **characterised in that** the conveyor platforms (21, 22, 23, 24) lie in a plane in the non-working state.

18. Method according to claim 14 to 17, **characterised in that**, for moving the conveyor platforms (21, 22, 23, 24) in the main transport direction (25) of the gas turbines, a conveyor platform (21) located at the front in the main transport direction is lowered and moved beneath the plane in the opposite direction (30) to the main transport direction, so that a front section is freed and conveyor platforms (22, 23, 24) arranged behind the lowered conveyor platform can be moved in the main transport direction (25).

19. Method according to claim 18, **characterised in that** the conveyor platform (21) that has been lowered and moved beneath the plane in the opposite direction (30) to the main transport direction is raised, after the remaining conveyor platforms (22, 23, 24) have moved in the main transport direction (25), in such a manner that a section freed by a rear conveyor platform (24) is occupied.

## Revendications

1. Dispositif pour déplacer des turbines à gaz, notamment des turbines d'avion (26, 27, 28), ou des modules de turbines à gaz, notamment en vue de leur maintenance, comportant plusieurs plateformes de manutention (21, 22, 23, 24) disposées l'une derrière l'autre, une turbine à gaz au moins pouvant être positionnée sur chacune desdites plateformes de manutention, et ladite turbine à gaz ou chaque turbine à gaz pouvant être déplacée par déplacement de plateformes de manutention (21, 22, 23, 24), **caractérisé en ce que** chaque plateforme de manutention (21, 22, 23, 24) comprend une zone de réception (53) pour un adaptateur (52), ledit adaptateur (52) pouvant être monté dans ladite zone de réception (53) et adapté à différents types de turbines à gaz.

2. Dispositif selon la revendication 1, **caractérisé en ce qu'**il est installé dans un sol (33) d'un atelier de telle sorte que le plan dans lequel les plateformes de manutention (21, 22, 23, 24) sont au repos est situé dans le plan du sol de telle sorte que lesdites plateformes de manutention sont accessibles sans barrière.

3. Dispositif selon l'une quelconque des revendications 1 et 2, **caractérisé par** un premier groupe d'entraînement destiné à déplacer les plateformes de manutention (21, 22, 23, 24), préférentiellement avec une turbine à gaz positionnée sur lesdites plateformes, dans une direction de transport principale (25) par des postes de travail disposés l'un derrière l'autre.

4. Dispositif selon la revendication 1, 2 ou 3, **caractérisé par** un deuxième groupe d'entraînement destiné à déplacer les plateformes de manutention (21, 22, 23, 24) dans le sens contraire à une direction de transport principale (25).

5. Dispositif selon l'une quelconque ou plusieurs des revendications 1 à 4, **caractérisé en ce que** les plateformes de manutention (21, 22, 23, 24) sont situées sur un plan lorsqu'elles sont au repos.

6. Dispositif selon la revendication 5, **caractérisé en ce qu'**une plateforme de manutention (21) située devant, dans une direction de transport principale (25), peut être abaissée et déplacée sous le plan, dans le sens contraire à la direction de transport principale, en vue de déplacer les plateformes de manutention (21, 22, 23, 24) dans la direction de transport principale (25) des turbines à gaz, de telle sorte qu'un secteur avant est libéré et des plateformes de manutention (22, 23, 24) disposées derrière la plateforme de manutention (21) abaissée peuvent être déplacées dans ladite direction de transport principale.

7. Dispositif selon la revendication 6, **caractérisé en ce que** la plateforme de manutation (21) abaissée et déplacée sous le plan, dans le sens contraire à la direction de transport principale, peut être soulevée à la suite du déplacement des autres plateformes de manutention (22, 23, 24) dans la direction de transport principale, de telle sorte qu'un secteur libéré par une plateforme de manutention (24) arrière peut être occupé.

8. Dispositif selon l'une quelconque ou plusieurs des revendications 1 à 7, **caractérisé en ce qu'**un premier groupe d'entraînement destiné à déplacer les plateformes de manutention (21, 22, 23, 24) dans la direction de transport principale (25) comprend plusieurs roues de friction (34), lesdites roues de friction (34) étant disposées de telle sorte que chaque plateforme de manutention (21, 22, 23, 24) à déplacer dans la direction de transport principale est en contact avec au moins une roue de friction (34).

9. Dispositif selon l'une quelconque ou plusieurs des revendications 1 à 8, **caractérisé en ce qu'**un deuxième groupe d'entraînement destiné à déplacer une plateforme de manutention (21, 22, 23, 24) dans le sens contraire à la direction de transport principale est configuré comme transporteur à chaîne (38).

10. Dispositif selon l'une quelconque ou plusieurs des revendications 1 à 9, **caractérisé par** des équipements de levage (42, 43) destinés à descendre ou monter les plateformes de manutention, un premier équipement de levage (42) étant disposé dans la zone d'un premier poste de travail situé devant, et un deuxième équipement de levage (43) étant disposé dans la zone d'un deuxième poste de travail situé derrière.

11. Dispositif selon l'une quelconque ou plusieurs des revendications 1 à 10, **caractérisé en ce qu'**une surface des plateformes de manutention (21, 22, 23, 24) comporte un revêtement antidérapant.

12. Dispositif selon l'une quelconque ou plusieurs des revendications 1 à 11, **caractérisé en ce que** des écartements (51) entre les plateformes de manutention (21, 22, 23, 24) et un fond (33) sont minimisés de telle sorte que ni des outils ni des composants d'une turbine à gaz ne peuvent tomber à travers les écartements, dans une zone située sous lesdites plateformes de manutention (21, 22, 23, 24).

13. Dispositif selon l'une quelconque ou plusieurs des revendications 1 à 12, **caractérisé en ce que** les plateformes de manutention (21, 22, 23, 24) peuvent être déplacées de manière discontinue, préférentiellement selon une cadence.

14. Procédé pour déplacer des turbines à gaz, à savoir des turbines d'avion (26, 27, 28) ou des modules de turbines à gaz, en vue de leur maintenance, des turbines à gaz positionnées sur des plateformes de manutention (21, 22, 23, 24) étant déplacées dans une direction de transport principale par plusieurs postes de travail disposés l'un derrière l'autre, de telle sorte que la ou chaque turbine à gaz ou les modules les composant étant déplacés du fait du déplacement desdites plateformes de manutention (21, 22, 23, 24), ladite maintenance comprenant le démontage de la turbine d'avion (26, 27, 28) en modules et/ou sous-ensembles et/ou pièces constitutives, l'inspection et, le cas échéant, la réparation desdits modules et/ou sous-ensembles et/ou pièces constitutives, de même que le montage ultérieur d'une turbine d'avion (26, 27, 28) à partir de modules inspectés et/ou réparés et/ou de nouveaux modules et/ou de nouveaux sous-ensembles et/ou de nouvelles pièces constitutives.

15. Procédé selon la revendication 14, **caractérisé en ce que** les turbines d'avion (26, 27, 28) sont déplacées de manière discontinue à travers les postes de travail, préférentiellement selon une cadence définie.

16. Procédé selon l'une quelconque des revendications 14 et 15, **caractérisé en ce qu'**un premier groupe d'entraînement destiné au déplacement des plateformes de manutention (21, 22, 23, 24) dans la direction de transport principale n'excède pas une valeur d'accélération de 2 m/minutes environ.

17. Procédé selon l'une quelconque des revendications 14 à 16, **caractérisé en ce que** les plateformes de manutention (21, 22, 23, 24) sont situées sur un plan lorsqu'elles sont au repos.

18. Procédé selon la revendication 14 à 17, **caractérisé en ce qu'**une plateforme de manutention (21) située devant, dans la direction de transport principale, est abaissée et déplacée sous le plan, dans le sens contraire à la direction de transport principale, en vue de déplacer les plateformes de manutention (21, 22, 23, 24) dans la direction de transport principale (25) des turbines à gaz, de telle sorte qu'un secteur avant est libéré et des plateformes de manutention (22, 23, 24) disposées derrière la plateforme de manutention abaissée peuvent être déplacées dans ladite direction de transport principale (25).

19. Procédé selon la revendication 18, **caractérisé en ce que** la plateforme de manutention (21) abaissée et déplacée sous le plan, dans le sens contraire à la direction de transport principale (30), est soulevée à la suite du déplacement des autres plateformes de manutention (22, 23, 24) dans la direction de transport principale (25), de telle sorte qu'un secteur libéré par une plateforme de manutention (24) arrière est occupé.
